# EUROPEAN PATENT SPECIFICATION

(11) **EP 2 057 198 B1**
(45) Date of publication and mention of the grant of the patent: **20.10.2010**
(21) Application number: 07813571.2
(22) Date of filing: 31.07.2007
(51) Int. Cl.: C08F 14/18, C08F 14/26, C08F 14/20, C08F 214/18

(54) **PROCESS FOR PRODUCING FLUOROPOLYMERS**
VERFAHREN ZUR HERSTELLUNG VON FLUORPOLYMEREN
PROCÉDÉ POUR LA FABRICATION DE POLYMÈRES FLUORÉS

(30) Priority: 24.08.2006 US 823406 P
(43) Date of publication of application: 13.05.2009
(73) Proprietor: 3M Innovative Properties Company, St. Paul, MN 55133-3427 (US)
(72) Inventor: HINTZER, Klaus, 84504 Burgkirchen (DE); KASPAR, Harald, 84504 Burgkirchen (DE); SCHWERTFEGER, Werner, 84504 Burgkirchen (DE); HEINFELDNER, Robert, 84504 Burgkirchen (DE)
(74) Representative: Kurz, Arnd
(86) International application number: PCT/US2007/074792
(87) International publication number: WO 2008/024602

(56) References cited:
- EP-A2- 0 937 738
- EP-B1- 0 482 938
- WO-A1-2008/019155
- WO-A1-2008/140914
- JP-A- 06 248 016
- JP-A- 06 298 810
- US-A1- 2002 183 457
- US-A1- 2005 127 322

## Description

### Background

Commonly known or commercially employed fluoropolymers include polytetrafluoroethylene (PTFE), copolymers of tetrafluoroethylene (TFE) and hexafluoropropylene (HFP) (FEP polymers), copolymers of TFE and perfluoro(alkylvinyl)ethers (PFA polymers), copolymers of TFE and ethylene (ETFE polymers), terpolymers of TFE, HFP, and vinylidene fluoride (VDF) (THV polymers) and polymers of VDF (PVDF polymers), and others. Commercially employed fluoropolymers also include fluoroelastomers and thermoplastic fluoropolymers.

The making of such fluoropolymers generally involves the polymerization of gaseous monomers, that is monomers that under ambient conditions of temperature and pressure exist as a gas. Several polymerization methods are known to produce fluoropolymers. Such methods include suspension polymerization, aqueous emulsion polymerization, solution polymerization, polymerization using supercritical CO₂, and polymerization in the gas phase.

Solvent based polymerization processes for making fluoropolymers have been disclosed. For example, chlorofluorocarbons (CFC's), as exemplified by trichlorotrifluorocthane (F113), have been used. Due to the Montreal Protocol, however, F113 is now under ban and is not a commercially viable polymerization solvent. WO 2008/019155 describes a polymerization process in the presence of CO₂ and one or more solvents.

### Summary

The present applicants have recognized a need for a solvent for a polymerization process for fluoropolymers that has a combination of properties: low telogenic activity, a boiling point in an optimum range for use and especially recovery (as exemplified by HFE's with 9-12 carbons), low potential for global warming and ozone depletion, and ready availability or economical production from existing materials or industrial byproducts. The present applicants have found that the HFE's described in EP 928,796 B1 are not entirely well suited as polymerization solvents. For instance, when R' is a methyl group, the boiling point is comparatively low. For instance, n-C₄F₉-O-CH₃ (HFE 7100) has a boiling point of 61°C. Such a low boiling point makes efficient solvent recovery from polymerization media cumbersome. Furthermore, if R' is an ethyl group, the boiling point may be higher, but the telogenic activity of the ethoxy group is too high, thus leading to comparably low molecular mass for the fluoropolymers produced therein.

In one aspect, the present invention relates to a process for producing fluoropolymers comprising polymerizing at least one fluorinated monomer in a polymerization medium comprising a low-telogenic HFE selected from:
a) an HFE of the formula R_{f}CH₂OCF₂H;
   wherein R_{f} is selected from a linear partially fluorinated alkyl group, a linear partially fluorinated alkyl group interrupted with one or more oxygen atoms, a branched partially fluorinated alkyl group, a branched partially fluorinated alkyl group interrupted by one or more oxygen atoms, and a perfluorinated alkenyl group; and
   wherein the total number of carbon atoms of R_{f} is equal to or greater than 7;
b) an HFE of formula (I):

   R_{f}¹-O-R_{f}² (I)

   wherein R_{f}¹ is selected from (CF₃)₂CF-CHF-CF(CF₃)-, (CF₃)₂CF-(CHF-CF₃)-, (CF₃)₂CH-C(CF(CF₃)₂)₂-, (CF₃)₂C-CH-(CF-(CF₃)₂)₂-, (CF₃)₂C-CH(CF₂CF₃)(CF-(CF₃)₂)- and (CF₃)₂CH-C(CF₂CF₃)(CF(CF₃)₂)-; and R_{f}² is -C₆H₄-X where X is selected from H, F, a perfluorinated alkyl group or a partially fluorinated alkyl group;
c) an HFE of formula (I) wherein R_{f}¹ is selected from (CF₃)₂CH-CF₂- and (CF₃)₂C=CF-; and R_{f}² is selected from -C₆H₄-X, and -CH₂-(CF₂)ₙ-H where X is selected from H, F, a perfluorinated alkyl group or a partially fluorinated alkyl group and n=4-6;
d) an HFE of formula (I) wherein R_{f}¹ is selected from HCF₂CF₂- and CF₃-CHF-CF₂-; and R_{f}² is selected from -CH₂(CF₂)ₙH and n is selected such that the total number of carbon atoms of formula I is greater than or equal to 9; and
e) an HFE polyether selected from R_{f}O(CF₂CFCF₃)ₙOCHFCF₃ where n=2-4 and R_{f} is perfluoroalkyl; CF₃CHFO(CF₂)ₙOCHFCF₃ where n=4-6; HCF₂(OCF₂)ₙOCF₂H where n=2-6; and HCF₂(OCF₂CF₂)ₙOCF₂H where n=2-6.

### Detailed Description

In one embodiment the process for producing fluoropolymers may comprise polymerizing at least one fluorinated monomer to yield a fluoropolymer in a polymerization medium. The polymerization medium comprises water and a low-telogenic hydrofluoroether (HFE), wherein the HFE is capable of co-distilling with water. The HFE that co-distills with water may further have 9 or more carbons.

A "low telogenic HFE" refers to an HFE that when used in the fluoropolymer polymerization of this invention, yields a fluoropolymer having a melt flow index (MFI) that changes by less than 100% when compared to a fluoropolymer produced in a polymerization using the same amount by weight of the analog perfluorinated solvent in the otherwise identical fluoropolymer polymerization. For example, the perfluorinated analog of CF₃CH₂OCF₂H would be CF₃CF₂OCF₃.

"Co-distillation" is defined herein as azeotrope distillation with water or steam distillation.

In one embodiment the HFE solvent may have a boiling point of from 50°C to 200°C.

In further embodiments the HFE solvent may be a blend of two or more different HFEs. In the solvent, which may contain water, the amount of optional water may be from 1:10 to 10:1 based on the total weight of monomers in the polymerization medium. The amount of solvent may be from 1:20 to 20:1 based on the total weight of monomers in the polymerization medium.

In other embodiments, the fluorinated monomer may be selected from TFE, trifluoroethylene (TrFE), chlorotrifluoroethylene (CTFE), HFP, VDF, vinyl fluoride (VF) and perfluoro(alkylvinyl)ether (PAVE); or combinations thereof. The polymerization process may further comprise ethylene or propylene monomers or combinations thereof.

In some embodiments, the fluoropolymer may be semicrystalline with a melting point above 60°C.

The fluoropolymer may be selected from the group consisting of PTFE, ETFE, FEP, PFA, PVF, THV, PVDF and combinations thereof. In related embodiments the amount of fluoropolymer solids produced in the polymerization may be greater than 10% by weight, greater than 20% by weight or even greater than 30% by weight, based on the amount of water and fluorinated liquid.

In another embodiment the polymerization medium is mixed during polymerization with a coaxial turbine double helical ribbon mixer.

In yet another embodiment the fluoropolymer slurry is thixotropic or shear thinning. In some embodiments the slurry may be a Newtonian fluid. A "Newtonian fluid" is a fluid having a shear stress that is linearly proportional to the velocity gradient in the direction perpendicular to the plane of shear.

In another embodiment the process may further comprise separating the fluoropolymer and water from the HFE solvent, agglomerating the fluoropolymer, drying the fluoropolymer and reusing the solvent for another polymerization process.

The processes described herein can be used to produce any of the known fluoropolymers, that is polymers that have a partially or fully fluorinated backbone. In particular, the processes can be used to produce homo- and copolymers of fluorinated olefinic monomers such as TFE, VDF and CTFE. Suitable comonomers include fluorinated monomers such as HFP, perfluoro(vinyl)ethers including perfluoro(alkyl vinyl)ethers (PAVE) such as perfluoro(methylvinyl)ether and perfluoro-(n-propylvinyl)ether and perfluoro(alkoxyvinyl)ethers such as those corresponding to formula (II):

CF₂=CFO(R¹O)ₙ(R²O)ₘR³ (II)

wherein R¹ and R² are each independently selected from a linear or branched perfluoroalkylene group having from 1 to 6 carbon atoms, m and n are each independently from 0 to 10 and R³ is a perfluoroalkyl group of from 1 to 6 carbon atoms. Combinations of any of the above-named fluorinated monomers are also contemplated.

Non-fluorinated monomers that can be used as comonomers include alpha-olefins, for example ethylene and propylene. The process of the invention can be used to produce PTFE, fluoroelastomers as well as fluorothermoplasts.

The polymerization is generally initiated through the use of free radical generating initiators. Typically, such free radical sources include organic compounds capable of thermally decomposing to free radical species, and in aqueous systems (as described below) redox type initiators are often used. However, any source of appropriate free radicals may be used in the process. For instance, one suitable class of initiators includes organic compounds that may thermally decompose or decompose on exposure to ultraviolet light, assuming that the apparatus used for the process allows the process medium to be exposed to ultraviolet light.

Not all free radical sources will polymerize any particular fluoromonomer or combination of monomers. Free radical sources effective with various fluoromonomers and monomer combinations are described, for example, in J. C. Masson in J. Brandrup and E. H. Immergut, Ed., Polymer Handbook, 3rd Ed., John Wiley & Sons, New York, 1989, p. II/1-II/65, and C. S. Sheppard and V. Kamath in H. F. Mar. et al., Ed., Encyclopedia of Chemical Technology, 3rd Ed., vol. 13, John Wiley & Sons, New York, 1981, p. 355-373. Typical organic compounds that thermally decompose that are useful for at least some fluoromonomers are organic peroxides such as t-butylpivalate, t-butylperoxy-2-ethylhexanoate, azobisisobutyronitrile, azobisisovaleronitrile, acetyl peroxide, (CF₃CF₂CF₂[CF(CF₃)CF₂O]ₓCF(CF₃)COO)₂ where x is 0 or an integer of 1 to 20, CF₃CF₂CF₂O[CF(CF₃)CF₂O]ₓCF(CF₃)COOF where x is 0 or an integer of 1 to 20, [CF₃(CF₂)ₙCOO]₂, HCF₂(CF₂)ₙCOOF, HCF₂(CF₂)ₙCOOF, and ClCF₂(CF₂)ₙCOOF, all where n is 0 or an integer of 1 to 8. Redox type free radical sources include, but are not limited to, potassium persulfate, or a combination of persulfate and bisulfite (usually as alkali metal salts). Ionic species are especially useful in aqueous systems. Fluorinated sulfinates, as described in US 5,378,782 and US 5,285,002, can be used as well.

The amount of initiator employed is typically between 0.01 and 5 % by weight, preferably between 0.05 and 1 % by weight based on the total weight of the polymerization mixture. The full amount of initiator may be added at the start of the polymerization or the initiator can be added to the polymerization in a continuous way during the polymerization until a conversion of 70 to 80% is achieved. One can also add part of the initiator at the start and the remainder in one or separate additional portions during the polymerization.

The polymerization system may further comprise other materials, such as emulsifiers, buffers and, if desired, complex-formers or chain-transfer agents. Adding a compound having chain transfer ability allows for control of the molecular weight of the polymer. With regard to a compound having a large chain transfer constant, only a small amount is required for adjusting the molecular weight. Further, it is preferred that the chain transfer agent (CTA) has small ozone destruction ability. A CTA, which meets such requirements, may, for example, be an HFC such as CF₂H₂, a hydrochlorofluorocarbon (HCFC) such as CF₃CF₂CHCl₂, a ketone such as acetone or an alcohol such as methanol or ethanol. Further preferred CTA's are alkanes such as ethane, propane, pentane, hexane or ethers such as dimethylether. The amount of CTA added varies depending upon the chain transfer constant of the CTA used. However, the amount is usually from 0.01 wt% to 5 wt% based on the weight of the polymerization medium.

Solvents used in the instant process can perform one or more than one function. They may be used as solvents for one or more of the constituents such as a monomer or free radical source, since adding such ingredients as solutions may be more convenient and/or accurate. The solvent may actually function as a solvent for the polymer that is made in the process (although the term solvent in this case does not necessarily imply that the polymer formed is soluble in the solvent). The solvents described herein may be present in any type of polymerizations, such as solvent, aqueous emulsion or suspension, or non-aqueous suspension polymerizations. Blends of solvents are also envisioned as suitable for the practice of this invention. A blend may, for example, be intentional or the result of an industrial process.

Mixed media of solvents and water can be used as a polymerization medium. The amounts of water can vary from 1:10 to 10:1 based on the total weight of monomers added to the polymerization medium. Generally the amount of solvent will vary from 1:20 to 20:1 based on the total weight of monomers added to the polymerization medium.

Additionally mixtures including supercritical monomer or supercritical fluids comprising materials such as HFP or CHF₃ can be used.

A wide range of polymerization conditions can be employed without particular restriction. The polymerization temperature can be from 0 °C to up to 150 °C, preferably 20 °C to 100 °C, depending mainly on the initiators used. The polymerization pressure is usually from 2 bar up to 60 bar, preferably from 5 to 40 bar. The present invention can be performed as batch process as well as continuously.

It is desirable that the solvent be readily removed from the polymer once the polymerization is completed. Preferably, the solvent used in the polymerization may be easily recovered and recycled. Following cool down of the polymerization product medium, the HFE separates to the bottom of the water/solvent mixture and facilitates easy removal from the water. The HFE may be vented, for example, into a lower level tank.

Solvents may also be removed by distillation or evaporation. Accordingly it is preferred that the solvent is volatile. The HFE solvents may advantageously co-distill with water, other solvents or combinations thereof. The co-distillation lowers the boiling point from that of the pure HFE and allows HFEs with higher molecular weight to be used. The higher molecular weight allows for even higher recovery efficiency and less solvent loss to the atmosphere.

During the evaporation or distillation, agglomeration of the fluoropolymer typically occurs with the continued application of stirring and heat. Free flowing, easy to handle agglomerates are typically obtained.

In some embodiments, the boiling point of the solvent described herein is no higher than about 200 °C, no higher than 150 °C or even no higher than 100 °C. Conversely, the solvent should not have a very low boiling point. Solvents that boil well below process temperature add their vapor pressure to the total pressure generated in the process, which may lead to the need for more expensive process equipment capable of holding higher pressures, could inadvertently evaporate creating material losses, or possibly creating dangerous residues (e. g., peroxide residue if peroxide is used as the initiator). Thus, the solvent has an atmospheric pressure boiling point of about 0 °C or higher, or even about 20 °C or higher. Particular ranges of pure (non-co-distilling) solvent boiling point include from 0 °C to 200 °C, from 20 °C to 200 °C, and even from 50 °C to 200 °C. The boiling point ranges disclosed here are all understood to be for the pure solvents at atmospheric pressure.

It is beneficial to have water present during the removal of the solvent. The presence of water may facilitate forming free flowing agglomerates of the polymer, which can be easily handled in the down stream processes. Typically the polymers are dried in ovens, belt dryers or fluidized beds before being melt-pelletized.

If needed, post-treatments before or after melt pelletization can be done. For example, post-fluorination may be used in order to remove H-containing moieties or end groups.

The polymerization may be a suspension polymerization, solution polymerization or a solvent slurry polymerization process. Solvent slurry polymerizations are defined as polymerizations carried out in two or more phases of water and solvent and may comprise a low-telogenic HFE, at least one fluorinated monomer, water, and an initiator.

The mixing technology for carrying out the processes described herein is not particularly limited, and may include, for instance, a simple marine propeller, a turbine type impeller, a double ribbon impeller such as those described by Kasakara et al. in Reports Res. Lab., Asahi Glass Co., Ltd or a coaxial turbine double helical ribbon mixer agitation system such as "KOAX 2035", commercially available from EKATO Rühr- und Mischtechnik GmbH (D-79841 Schopfheim, Germany). Alternatively, the reactor agitation system may use non-impeller type shear such as pumps or tumbler mixers or combinations thereof.

Two of the key benefits of the present invention are that the HFE solvents are easily accessible from commercial sources or industrial preparation and also that the HFE solvents undergo almost complete atmospheric degradation in case of unintended emissions.

Regarding accessibility of the solvents, it is noted that they can be easily prepared by reacting an olefin such as TFE or HFP with an appropriate alcohol under basic conditions as disclosed in US 2,409,274 and J. Am. Chem. Soc. 73, 1785 ((1958). For example,
R_{f}-CH₂O-CF₂H is obtainable by the reaction of the corresponding alcohol and R22 as described, for example, in J. of Fluorine Chem., 127, (2006), 400-404. Reactions of partially fluorinated alcohols with fluorinated olefins resulting in fluorinated ethers are described in Green Chemistry 4, 60 (2002). Branched fluroolefins like perfluoroisobutene or dimeric HFP can be converted to partially fluorinated ethers as well using alcohols under basic conditions. Such reactions are demonstrated in Russian Chem. Rev. 53, 256 (1984), Engl. Ed., and Bull. Chem. Soc. Jap. 54, 1151 (1981).

HFEs may be made from the corresponding ketones or acid fluorides, for example using the methods described in WO/9937598, US 6,046,368, or J. Fluorine Chem. 126, 1578 (2006).

Tetrafluoroethyl ethers, carrying one or two OCHFCF₃ groups, can prepared via HFPO oligomers or HFPO addition products to ketones or acid fluorides as disclosed in Angwandte Chemie Int. Ed. Engl. 24, 161 (1985).

The synthesis of HCF₂OC(CF₂)ₙOCF₂H with n being one or two is disclosed in EP 879839.

Decarboxylation of primary carboxylic acids in the presence of proton donators results in the formation of CF₂H groups as shown in J. Am. Chem. Soc. 75, 4525 (1953). This reaction creates fluorinated ethers carrying -CF₂H groups.

Degradation is facilitated by the presence of hydrogen atoms and since both sides of the ether of the present invention contain at least one hydrogen, degradation is enhanced.

Typical examples of HFE solvents include:
HCF₂-CF₂-O-CH₂-(CF₂)ₙ-X where X = H, F and n=6-7
CF₃-CHF-CF₂-O-CH₂-(CF₂)ₙ-H; n = 5 - 6
(CF₃)₂C=CF-O-CH₃
(CF₃)₂CH-CF₂-O-CH₂-(CF₂)ₙ-H; n = 4 - 6
(CF₃)₂CF-CHF-CF(OR)-CF₃ where R is alkyl with 3 more carbons
(CF₃)₂CF-CF(OR)-CHF-CF₃ where R is alkyl with 3 more carbons
C₆H₅O-CF₂-CF₂H
C₆H₅O-CF₂-CH(CF₃)₂
R_{f}-CH₂-O-CF₂H where R_{f} = partial or perfluoro with 7-8 carbons
R_{f}O(CF₂CFCF₃)ₙOCHFCF₃ where n=2-4 and R_{f} is perfluoroalkyl;
CF₃CHFO(CF₂)ₙOCHFCF₃ where n=4-6
HCF₂(OCF₂)ₙOCF₂H where n=2-6
HCF₂(OCF₂CF₂)ₙOCF₂H where n=2-6.

### Examples

### Comparative Examples 1-3

A variety of TFE/HFP/VDF/PPVE-1 quad polymers were produced in slurry polymerization processes under various conditions. The polymerization kettle had a total volume of 48.51 (including feeding pipes). A double helical ribbon impeller system was used similar to the setup disclosed by Kasahara et al. in Reports Res. Lab. Asahi Glass Co., Ltd., 52 (2002). The double helical ribbon impeller system used in this comparative example had the following dimensions: 2 blades with blade dimensions 42×10 mm, blade to blade distance of 105 mm and spiral height of 197 mm:

In all cases, the kettle was charged with 22.01 demineralized water and 10.01 fluorinated liquid. The polymerization was initiated by the addition of 2.0 g tert-butylperoxy-2-ethylhexanoate ("TBPEH" from Akzo Nobel) dissolved in the fluorinated liquid. The reaction temperature was 60°C in all cases. It was found that the polymerization rate was very sensitive to the agitation speed. A vigorous stirring usually increased the monomer uptake. The other reaction conditions are summarized in Table 1. In none of the cases was the formation of a polymer layer on the reactor wall observed. All polymer slurries could be vented from the kettle easily. The fluorinated liquid was removed from the polymer slurry by distillation. The physical characteristics of the dried polymers are also summarized in Table 1. The high MFI of comparative example 1 indicates that the ethoxy group of "NOVEC 7200" (C₄F₉OC₂H₅) has an unacceptably high telogenic effect resulting in unacceptably low molecular weight. Comparative examples 2-3 using "NOVEC 7100" have lower MFI and indicate how molecular weight of the fluoropolymer can be then further controlled with chain transfer agents. However, these solvents are still relatively volatile and may lead to less recovery efficiency and losses to the environment.

**Table 1**

| | CE1 | CE 2 | CE 3 |
|---|---|---|---|
| fluorinated liquid | NOVEC HFE 7200 | NOVEC HFE 7100 | NOVEC HFE 7100 |
| chain transfer agent | - | - | 0.5 bar ethane |
| precharge PPVE-1 | 165 g | 494 g | 330 g |
| precharge HFP | 990 g | 3000 g | 1980 g |
| precharge VDF | 80 g | 158 g | 158 g |
| precharge TFE | 515 g | 1032 g | 1032 |
| reaction pressure | 16.9 bar abs. | 10.0 bar abs. | 15.0 bar abs. |
| Agitation speed | 80 -145 rpm | 80 - 145 rpm | 80 - 190 rpm |
| PPVE-1 feed | 153 g | 3 g | 116g |
| HFP feed | 396 g | 125 g | 422 g |
| VDF feed | 469 g | 471 g | 377g |
| TFE feed | 2760 g | 2870 g | 2210 g |
| duration of monomer feed | 60 min | 285 min | 275 min |
| down polymerization period | 195 min | not applied | 30 min |
| final pressure | 11.2 | - | 13.9 |
| polymer obtained | 2.3 kg | 3.0 kg | 3.2 kg |
| MFI (265/5) | 39 g/10 min | 0.07 | 0.18 |
| melting point | 234°C | 234°C | 234°C |

### Example 1

The polymerization kettle with a total volume of 48.5 1 (including feeding pipes) is equipped with a double helical ribbon impeller system similar to that disclosed by Kasahara et.al. in Reports Res. Lab. Asahi Glass Co. Ltd., 52 (2002). The double helical ribbon impeller system has the following dimensions: 2 blades, each 42x10 mm in width, a blade to blade distance of 105 mm and a spiral height of 197 mm.

The oxygen free kettle is charged with 22.01 deionized water and 10.01 C₆H₅O-CF₂-CH(CF₃)₂ (produced by reaction of phenol, perfluoroisobutylene and peroxide) and is then heated up to 60° C. Initially, the initial agitation system is set to 80 rpm. The kettle is charged with 144 g ethylene and 1519 g tetrafluoroethylene (TFE) to 15.0 bar absolute reaction pressure. The polymerization is initiated by the addition of 8 g tert-butylpilvalate (75% solution in n-decane, "TBPPI-75-AL" from Degussa; Pullach/Germany). After a brief period the agitation is set to 110 rpm, which results in a more vigorous monomer uptake. Subsequently the reaction temperature and reaction pressure of 15.5 bar absolute is maintained by the feeding of TFE and ethylene into the gas phase with a feeding ratio of ethylene (kg)/TFE (kg) of 0.280. When a total feed of 1200 g TFE is reached the monomer uptake stops and the monomer valves are closed. After further mixing of about an hour the reaction pressure drops and the reactor is cooled down to room temperature. The reactor is then vented and flushed with N₂ in three cycles. The HFE solvent is distilled off and the fluoropolymer is agglomerated and then dried.

### Example 2

Example 1 is repeated but with a coaxial turbine double helical ribbon mixer agitation system "KOAX 2035", commercially available from EKATO Rühr- und Mischtechnik GmbH (D-79841 Schopfheim, Germany). The coaxial agitation system consists of the following elements: an inner shaft with an independent motor equipped with 2 marine type impellers ("EKATO-Viscoprop" with the dimensions: 2 blades each, 240 mm diameter, 53° angle); an outer shaft with an independent motor equipped with an anchor or turbine type bottom stirrer ("EKATO-Bodenorgan"); and a double helical ribbon impeller agitator fixed at the anchor type bottom stirrer ("EKATO-Paravisc").

The outer Paravisc agitator is operated at 38 rpm (clockwise, material flow directed upwards) and the inner Viscoprop agitator is operated at 380 rpm (counter-clockwise, material flow directed downwards).

## Claims

1. A process for producing fluoropolymers comprising polymerizing at least one fluorinated monomer to yield a fluoropolymer in a polymerization medium comprising water and a low-telogenic hydrofluoroether (HFE) selected from:
a) an HFE of the formula R_{f}CH₂OCF₂H;
wherein R_{f} is selected from a linear partially fluorinated alkyl group, a linear partially fluorinated alkyl group interrupted with one or more oxygen atoms, a branched partially fluorinated alkyl group, a branched partially fluorinated alkyl group interrupted by one or more oxygen atoms, and a perfluorinated alkenyl group; and
wherein the total number of carbon atoms of R_{f} is equal to or greater than 7;
b) an HFE of formula (I):
R_{f}1-O-R_{f}² (I)
wherein R_{f}¹ is selected from (CF₃)₂CF-CHF-CF(CF₃)-, (CF₃)₂CF-(CHF-CF₃)-, (CF₃)₂CH-C(CF(CF₃)₂)₂-, (CF₃)₂C-CH-(CF-(CF₃)₂)₂-, (CF₃)₂C-CH(CF₂CF₃)(CF-(CF₃)₂)- and (CF₃)₂CH-C(CF₂CF₃)(CF(CF₃)₂)-; and R_{f}² is -C₆H₄-X where X is selected from H, F, a perfluorinated alkyl group or a partially fluorinated alkyl group;
c) an HFE of formula (I) wherein R_{f}¹ is selected from (CF₃)₂CH-CF₂- and (CF₃)₂C=CF- when R_{f}² is selected from -C₆H₄-X, and -CH₂-(CF₂)ₙ-H where X is selected from H, F, a perfluorinated alkyl group or a partially fluorinated alkyl group and n=4-6;
d) an HFE of formula (I) wherein R_{f}¹ is selected from HCF₂CF₂- and CF₃-CHF-CF₂- and R_{f2} is selected from -CH₂(CF₂)ₙH and n is selected such that the total number of carbon atoms of formula I is greater than or equal to 9; and
e) an HFE polyether selected from R_{f}O(CF₂CFCF₃)ₙOCHFCF₃ where n=2-4 and R_{f} is perfluoroalkyl; CF₃CHFO(CF₂)ₙOCHFCF₃ where n=4-6;
HCF₂(OCF₂)ₙOCF₂H where n=2-6; and HCF₂(OCF₂CF₂)ₙOCF₂H where n=2-6.

2. The process of claim 1 wherein the HFE is capable of co-distilling with water.

3. The process of claim 1 wherein the HFE has a boiling point of from 50°C to 200°C.

4. The process of claim 1 comprising a blend of two or more different HFEs.

5. The process of claim 1 wherein the polymerization medium is a solvent slurry.

6. The process of claim 1 wherein the fluorinated monomer is selected from TFE, trifluoroethylene (TrFE), chlorotrifluoroethylene (CTFE), HFP, VDF, vinyl fluoride (VF) and perfluoro(alkylvinyl)ether (PAVE), and combinations thereof.

7. The process of claim 1 further comprising co-polymerizing with the at least one fluorinated monomer a non-fluorinated co-monomer selected from ethylene and propylene and combinations thereof.

8. The process of claim 1 wherein the fluoropolymer is semicrystalline with a melting point above 60°C.

9. The process of claim 8 wherein the fluoropolymer is selected from the group consisting of PTFE, ETFE, FEP, PFA, PVF, THV, PVDF and combinations thereof.

10. The process of claim 1 further comprising separating the fluoropolymer and water from the HFE solvent, agglomerating the fluoropolymer, drying the fluoropolymer and reusing the solvent for another process of claim 1.

11. The process of claim 10 wherein separating comprises distilling the HFE solvent while agglomerating the fluoropolymer.

12. The process of claim 1 wherein the amount of water is from 1:10 to 10:1 based on the total weight of monomers in the polymerization medium.

13. The process of claim 1 wherein the amount of solvent is from 1:20 to 20:1 based on the total weight of monomers in the polymerization medium.

14. The process of claim 1 wherein the amount of fluoropolymer solids produced in the polymerization is greater than 10% by weight based on the amount of water and fluorinated liquid.

15. The process of claim 1 further comprising mixing the polymerization with a coaxial turbine double helical ribbon mixer while polymerizing.

## Patentansprüche

1. Verfahren zur Herstellung von Fluorpolymeren, bei dem man mindestens ein fluoriertes Monomer in einem Polymerisationsmedium, das Wasser und einen niedertelogenen Hydrofluorether (HFE), ausgewählt aus
a) einem HFE der Formel R_{f}CH₂OCF₂H;
worin R_{f} unter einer linearen teilfluorierten Alkylgruppe, einer linearen teilfluorierten Alkylgruppe, die durch ein oder mehrere Sauerstoffatome unterbrochen ist, einer verzweigten teilfluorierten Alkylgruppe, einer verzweigten teilfluorierten Alkylgruppe, die durch ein oder mehrere Sauerstoffatome unterbrochen ist, und einer perfluorierten Alkenylgruppe ausgewählt ist und
worin die Gesamtzahl der Kohlenstoffatome von R_{f} gleich oder größer als 7 ist;
b) einem HFE der Formel (I):
R_{f}¹-O-R_{f}² (I)
worin R_{f}¹ unter (CF₃)₂CF-CHF-CF(CF₃)-, (CF₃)₂CF-(CHF-CF₃)-, (CF₃)₂CH-C(CF(CF₃)₂)₂-, (CF₃)₂C-CH-(CF-(CF₃)₂)₂-, (CF₃)₂C-CH(CF₂CF₃)(CF-(CF₃)₂)- und (CF₃)₂CH-C(CF₂CF₃)(CF(CF₃)₂)-ausgewählt ist
und R_{f}² für -C₆H₄-X steht, wobei X unter H, F, einer perfluorierten Alkylgruppe oder einer teilfluorierten Alkylgruppe ausgewählt ist;
c) einem HFE der Formel (I), worin R_{f}¹ unter (CF₃)₂CH-CF₂- und (CF₃)₂C=CF- ausgewählt ist, wenn R_{f}² unter -C₆H₄-X und -CH₂-(CF₂)ₙ-H ausgewählt ist, wobei X unter H, F, einer perfluorierten Alkylgruppe oder einer teilfluorierten Alkylgruppe ausgewählt ist und n=4-6;
d) einem HFE der Formel (I), worin R_{f}¹ unter HCF₂CF₂- und CF₃-CHF-CF₂- ausgewählt ist und R_{f}² unter -CH₂(CF₂)ₙH ausgewählt ist und n so gewählt ist, daß die Gesamtzahl der Kohlenstoffatome der Formel I größer als oder gleich 9 ist; und
e) einem HFE-Polyether, ausgewählt unter R_{f}O(CF₂CFCF₃)ₙOCHFCF₃, wobei n=2 bis 4 und R_{f} für Perfluoralkyl steht; CF₃CHFO(CF₂)ₙOCHFCF₃, wobei n= 4 bis 6; HCF₂(OCF₂)ₙOCF₂H, wobei n=2 bis 6; und HCF₂(OCF₂CF₂)ₙOCF₂H, wobei n=2 bis 6, ausgewählt ist,
umfaßt, zu einem Fluorpolymer polymerisiert.

2. Verfahren nach Anspruch 1, bei dem der HFE mit Wasser codestillierbar ist.

3. Verfahren nach Anspruch 1, bei dem der HFE einen Siedepunkt von 50°C bis 200°C aufweist.

4. Verfahren nach Anspruch 1, umfassend eine Mischung von zwei oder mehr verschiedenen HFEs.

5. Verfahren nach Anspruch 1, bei dem es sich bei dem Polymerisationsmedium um eine Lösungsmittelaufschlämmung handelt.

6. Verfahren nach Anspruch 1, bei dem man das fluorierte Monomer unter TFE, Trifluorethylen (TrFE), Chlortrifluorethylen (CTFE), HFP, VDF, Vinylfluorid (VF) und Perfluor(alkylvinyl)ether (PAVE) und Kombinationen davon auswählt.

7. Verfahren nach Anspruch 1, bei dem man ferner mit dem mindestens einen fluorierten Monomer ein unter Ethylen und Propylen und Kombinationen davon ausgewähltes nichtfluoriertes Comonomer copolymerisiert.

8. Verfahren nach Anspruch 1, bei dem das Fluorpolymer teilkristallin ist und einen Schmelzpunkt von mehr als 60°C aufweist.

9. Verfahren nach Anspruch 8, bei dem man das Fluorpolymer aus der Gruppe bestehend aus PTFE, ETFE, FEP, PFA, PVF, THV, PVDF und Kombinationen davon auswählt.

10. Verfahren nach Anspruch 1, bei dem man ferner das Fluorpolymer und das Wasser von dem HFE-Lösungsmittel abtrennt, das Fluorpolymer agglomeriert, das Fluorpolymer trocknet und das Lösungsmittel für ein weiteres Verfahren nach Anspruch 1 verwendet.

11. Verfahren nach Anspruch 10, bei dem das Abtrennen das Abdestillieren des HFE-Lösungsmittels unter Agglomerierung des Fluorpolymers umfaßt.

12. Verfahren nach Anspruch 1, bei dem die Wassermenge 1:10 bis 10:1, bezogen auf das Gesamtgewicht der Monomere im Polymerisationsmedium, beträgt.

13. Verfahren nach Anspruch 1, bei dem die Lösungsmittelmenge 1:20 bis 20:1, bezogen auf das Gesamtgewicht der Monomere im Polymerisationsmedium, beträgt.

14. Verfahren nach Anspruch 1, bei dem die Menge der bei der Polymerisation hergestellten Fluorpolymerfeststoffe mehr als 10 Gew.-%, bezogen auf die Menge an Wasser und fluorierter Flüssigkeit, beträgt.

15. Verfahren nach Anspruch 1, bei dem man ferner die Polymerisation während der Polymerisation mit einem Koaxialturbinendoppelhelixbandmischer mischt.

## Revendications

1. Procédé de fabrication de fluoropolymères, comprenant la polymérisation d'au moins un monomère fluoré pour obtenir un fluoropolymère dans un milieu de polymérisation comprenant de l'eau et un hydrofluoroéther (HFE) faiblement télogénique choisi parmi
a) un HFE de formule R_{f}CH₂OCF₂H;
R_{f} étant choisi parmi un groupe alkyle linéaire partiellement fluoré, un groupe alkyle linéaire partiellement fluoré interrompu par un ou plusieurs atomes d'oxygène, un groupe alkyle ramifié partiellement fluoré, un groupe alkyle ramifié partiellement fluoré interrompu par un ou plusieurs atomes d'oxygène et un groupe alcényle perfluoré ; et
le nombre total d'atomes de carbone de R_{f} étant supérieur ou égal à 7 ;
b) un HFE de formule (I)
R_{f}¹-O-R_{f}² (I)
R_{f}¹ étant choisi parmi (CF₃)₂CF-CHF-CF(CF₃)-, (CF₃)₂CF-(CHF-CF₃)-, (CF₃)₂CH-C(CF(CF₃)₂)₂-, (CF₃)₂C-CH-(CF-(CF₃)₂)₂-, (CF₃)₂C-CH(CF₂CF₃)(CF-(CF₃)₂)- et (CF₃)₂CH-C(CF₂CF₃)(CF(CF₃)₂)- ;
et R_{f}² étant -C₆H₄-X, X étant choisi parmi H, F, un groupe alkyle perfluoré ou un groupe alkyle partiellement fluoré ;
c) un HFE de formule (I) dans laquelle R_{f}¹ est choisi parmi (CF₃)₂CH-CF₂-et (CF₃)₂C=CF- lorsque R_{f}² est choisi parmi -C₆H₄-X et -CH₂-(CF₂)ₙ-H, X étant choisi parmi H, F, un groupe alkyle perfluoré ou un groupe alkyle partiellement fluoré et n = 4 à 6 ;
d) un HFE de formule (I) dans laquelle R_{f}¹ est choisi parmi HCF₂CF₂- et CF₃-CHF-CF₂ et R_{f}² est choisi parmi -CH₂(CF₂)ₙH et n est choisi de manière à ce que le nombre total d'atomes de carbone de la formule I soit supérieur ou égal à 9 ; et
e) un polyéther HFE choisi parmi R_{f}O(CF₂CFCF₃)ₙOCHFCF₃, avec n = 2 à 4 et R_{f} étant un perfluoroalkyle ; CF₃CHFO(CF₂)ₙOCHFCF₃ avec n = 4 à 6 ; HCF₂(OCF₂)ₙOCF₂H avec n = 2 à 6 ; et HCF₂(OCF₂CF₂)ₙOCF₂H avec n = 2 à 6.

2. Procédé selon la revendication 1, dans lequel l'HFE peut être co-distillé avec l'eau.

3. Procédé selon la revendication 1, dans lequel l'HFE a un point d'ébullition de 50 °C à 200 °C.

4. Procédé selon la revendication 1, comprenant un mélange de deux HFE différents ou plus.

5. Procédé selon la revendication 1, dans lequel le milieu de polymérisation est une pâte de solvant.

6. Procédé selon la revendication 1, dans lequel le monomère fluoré est choisi parmi le TFE, le trifluoroéthylène (TrFE), le chlorotrifluoroéthylène (CTFE), l'HFP, le VDF, le fluorure de vinyle (VF) et l'éther perfluoro(alkylvinylique) (PAVE) et leurs combinaisons.

7. Procédé selon la revendication 1, comprenant également la copolymérisation avec le ou les monomères fluorés d'un comonomère non fluoré choisi parmi l'éthylène et le propylène et leurs combinaisons.

8. Procédé selon la revendication 1, dans lequel le fluoropolymère est semicristallin avec un point de fusion supérieur à 60 °C.

9. Procédé selon la revendication 8, dans lequel le fluoropolymère est choisi dans le groupe constitué par PTFE, ETFE, FEP, PFA, PVF, THV, PVDF et leurs combinaisons.

10. Procédé selon la revendication 1, comprenant également la séparation du fluoropolymère et de l'eau du solvant HFE, l'agglomération du fluoropolymère, le séchage du fluoropolymère et la réutilisation du solvant pour un autre procédé selon la revendication 1.

11. Procédé selon la revendication 10, dans lequel la séparation comprend la distillation du solvant HFE pendant l'agglomération du fluoropolymère.

12. Procédé selon la revendication 1, dans lequel la quantité d'eau est de 1:10 à 10:1 par rapport au poids total des monomères dans le milieu de polymérisation.

13. Procédé selon la revendication 1, dans lequel la quantité de solvant est de 1:20 à 20:1 par rapport au poids total des monomères dans le milieu de polymérisation.

14. Procédé selon la revendication 1, dans lequel la quantité de solides de fluoropolymère produits lors de la polymérisation est supérieure à 10 % en poids par rapport à la quantité d'eau et de liquide fluoré.

15. Procédé selon la revendication 1, comprenant également le mélange de la polymérisation avec un mélangeur à vis hélicoïdale double à turbine coaxiale pendant la polymérisation.
